# FASCICULE DE BREVET EUROPEEN

(11) **EP 3 055 265 B1**
(45) Date de publication et mention de la délivrance du brevet: **27.05.2020**
(21) Numéro de dépôt: 14796224.5
(22) Date de dépôt: 09.10.2014
(51) Int. Cl.: C03C 17/36

(54) **VITRAGE DE CONTRÔLE THERMIQUE**
WÄRMESTEUERNDE VERGLASUNG
THERMAL CONTROL GLAZING

(30) Priorité: 10.10.2013 FR 1359829
(43) Date de publication de la demande: 17.08.2016
(73) Titulaire: Saint-Gobain Glass France, 92400 Courbevoie (FR)
(72) Inventeur: PALACIOS-LALOY, Augustin, F-38000 Grenoble (FR); BENEDETTO, Alessandro, F-75010 Paris (FR); VINCENT, Julia, 77860 COUILLY PONT AUX DAMES (DE)
(74) Mandataire: Saint-Gobain Recherche
(86) Numéro de dépôt international: PCT/FR2014/052560
(87) Numéro de publication internationale: WO 2015/052440

(56) Documents cités:
- EP-A1- 1 829 835
- EP-A1- 2 489 507
- WO-A1-2013/057424
- WO-A2-2009/150343
- FR-A1- 2 799 005
- FR-A1- 2 981 646
- US-A1- 2005 069 717

## Description

L'invention concerne les vitrages de contrôle thermique isolants et/ou antisolaire, munis d'empilements incorporant plusieurs couches minces dites fonctionnelles, c'est-à-dire agissant sur le rayonnement solaire et/ou thermique essentiellement par réflexion et/ou absorption du rayonnement infrarouge proche (solaire) ou lointain (thermique). La présente invention concerne plus particulièrement les vitrages de contrôle thermique et en particulier antisolaire, notamment ceux destinés au domaine du bâtiment ou encore au secteur automobile.

On entend par couche "fonctionnelle" ou encore « active », au sens de la présente demande, les couches de l'empilement qui confèrent à l'empilement l'essentiel de ses propriétés thermiques d'isolation. Le plus souvent les empilements en couches minces équipant le vitrage lui confèrent des propriétés sensiblement améliorées de contrôle du rayonnement solaire ou thermique essentiellement par les propriétés métalliques intrinsèques desdites couches actives. Lesdites couches agissent sur le flux de rayonnement traversant ledit vitrage, par opposition aux autres couches, généralement en matériau diélectrique, ayant pour fonction essentielle la protection chimique ou mécanique desdites couches fonctionnelles.

De tels vitrages munis d'empilements de couches minces agissent sur le rayonnement solaire incident ou sur le rayonnement thermique soit essentiellement par l'absorption du rayonnement incident par la ou les couches fonctionnelles, soit essentiellement par réflexion par ces mêmes couches.

Ils sont regroupés sous la désignation de vitrage d'isolation thermique. Ils sont commercialisés et utilisés essentiellement :
- soit pour assurer essentiellement une protection de l'habitation du rayonnement solaire et en éviter une surchauffe, de tels vitrages étant qualifiés dans le métier de vitrages antisolaires,
- soit pour assurer essentiellement une isolation thermique de l'habitation et éviter les déperditions de chaleur, ces vitrages étant alors qualifiés de vitrages isolants.

Par antisolaire, on entend ainsi au sens de la présente invention la faculté du vitrage de limiter le flux énergétique, en particulier le rayonnement Infrarouge solaire (IRS) le traversant depuis l'extérieur vers l'intérieur de l'habitation ou de l'habitacle.

Par isolant thermique, on entend ainsi un vitrage muni d'au moins une couche fonctionnelle lui conférant une déperdition énergétique diminuée, ladite couche présentant des propriétés de réflexion du rayonnement IRL (infrarouge lointain) compris entre 5 et 50 micromètres.

Dans certains pays, les normes impliquent que les vitrages présentent des propriétés à la fois antisolaire et d'isolation thermique.

De façon bien connue, par exemple décrite dans la publication de référence « Les techniques de l'ingénieur, Vitrage à isolation thermique renforcée, C3635 (2004)», une telle propriété de réflexion est directement fonction de l'émissivité de la face du vitrage munie de l'empilement comprenant la ou les couches fonctionnelles.

D'une manière générale, toutes les caractéristiques lumineuses et thermiques présentées dans la présente description sont obtenues selon les principes et méthodes décrits dans les normes internationales ISO 9050 (2003) et ISO 10292 (1994), se rapportant respectivement à la détermination des caractéristiques lumineuses et énergétiques des vitrages utilisés dans le verre pour la construction.

Associés au substrat verrier, ces revêtements doivent en outre également de préférence être esthétiquement plaisants, c'est-à-dire que le vitrage muni de son empilement doit présenter une colorimétrie, en transmission comme en réflexion, en particulier du coté intérieur du vitrage (c'est à dire du coté du vitrage où la couche est présente), suffisamment neutre pour ne pas incommoder les utilisateurs, ou alternativement une teinte légèrement bleue ou verte, notamment dans le domaine du bâtiment. Par couleur neutre ou teinte bleue-verte, on entend au sens de la présente invention, dans le système de colorimétrie CIE LAB (L*, a*, b*), une valeur absolue a* inférieure ou égale à 10 et une valeur b* de préférence négative.

Quelque soit la face du vitrage, cette teinte doit être durable et uniforme sur toute la surface du vitrage, en particulier si l'empilement de couche est soumis à un traitement thermique durant ou après son cycle de fabrication. La résolution d'un tel problème d'une conservation durable de la même colorimétrie sur toute la surface du verre est particulièrement impérieuse lorsque l'empilement de couches est déposé sur un simple vitrage, notamment sur sa face 2, c'est-à-dire la face destinée à être tournée vers l'intérieur du bâtiment. Impérativement, ces vitrages munis d'empilements fonctionnels doivent ainsi être capables de subir un traitement thermique du type trempe, recuit ou bombage, sans apparition de défauts, sans dégradation de leurs propriétés d'isolation thermiques initiales et de préférence sans variation significative de leurs propriétés optiques. En particulier, après le traitement thermique, les vitrages munis de couches selon l'invention doivent présenter une transmission lumineuse sensiblement constante, présenter une émissivité la plus faible et la plus constante possible (mesurée par le coefficient d'émissivité normale ε_{N}, l'émissivité mesurant les performances de filtrage du rayonnement solaire), et idéalement une colorimétrie relativement proche. Autrement dit, l'un des objets de la présente invention est de fournir un empilement de couches minces dont l'aspect et les propriétés initiales ne sont pas dégradées lorsque le verre muni dudit empilement subit un traitement thermique et notamment lorsqu'il est trempé et/ou bombé.

Les empilements les plus performants commercialisés à l'heure actuelle pour résoudre les problèmes précédents incorporent une couche métallique du type argent fonctionnant essentiellement sur le mode de la réflexion d'une majeure partie du rayonnement IR (infrarouge) incident. Ces empilements sont ainsi utilisés principalement en tant que vitrages du type bas émissifs (ou low-e en anglais) pour l'isolation thermique des bâtiments. Ces couches sont cependant très sensibles à l'humidité et sont donc exclusivement utilisées dans des doubles vitrages, en face 2 ou 3 de celui-ci, pour être protégées de l'humidité. Il n'est ainsi pas possible de déposer de telles couches sur des vitrages simples (aussi appelés monolithiques). Les empilements selon l'invention ne comprennent pas de telles couches en métaux précieux notamment en Argent, ou encore en Or ou en Platine ou alors en quantités très négligeables, notamment sous formes d'impuretés inévitables.

D'autres couches métalliques à fonction antisolaire ont déjà également été reportées dans le domaine, comprenant des couches fonctionnelles du type Nb métallique ou nitruré, tel que décrit par exemple dans la demande WO01/21540 ou encore dans la demande WO2009/112759. Au sein de telles couches, le rayonnement solaire (visible et IRS) est absorbé et réfléchi de manière non sélective par la couche fonctionnelle comprenant du niobium.

Il est plus particulièrement proposé, dans la demande de brevet WO01/21540 A1, un substrat transparent muni d'un empilement de couches minces constitué d'une couche fonctionnelle en métal niobium ou en nitrure de ce métal et une surcouche en nitrure ou oxynitrure d'aluminium et/ou nitrure ou oxynitrure de silicium. Cette solution est relativement satisfaisante puisque l'empilement est considéré comme bombable et/ou trempable : après le traitement thermique, le revêtement est résistant mécaniquement tout en conservant de bonnes caractéristiques optiques. Cependant, avec de telles couches métalliques, si l'on souhaite obtenir des vitrages dont l'émissivité est plus faible et/ou diminuer leur transmission lumineuse T_{L}, il est nécessaire d'augmenter l'épaisseur de la couche fonctionnelle, ce qui présente l'inconvénient d'augmenter conjointement les réflexions lumineuses, en particulier à l'intérieur du bâtiment ou de l'automobile. L'empilement de couches minces peut alors réfléchir fortement le rayonnement lumineux provenant de l'intérieur du bâtiment et nuire à la vision vers l'extérieur.

Pour résoudre ce problème, la demande de brevet WO2009/150881 décrit des empilements comprenant une pluralité de couches de niobium, chaque couche fonctionnelle étant séparée de la précédente par une couche faite en un matériau diélectrique, en particulier en nitrure de silicium.WO-2009/150343 concerne un substrat transparent fonction verrire muni d'un empilement de couches minces agissant sur le rayonnement solaire.EP2489507 décrit une vitre feuilletée (1) pour une ouverture de véhicule comprend deux vitres individuelles (2, 3) reliées entre elles par une couche adhésive thermoplastique (4) et un système de couches (7) agencé sur une surface de vitre des vitres individuelles. Le système de couches comprend au moins une couche fonctionnelle à base d'au moins un métal comprenant du niobium, du tantale, du molybdène et du zirconium. FR2981646 décrit un vtrage à propriété de contrôle solaire comprenant un substrat verrier sur lequel est déposé un empilement de couches, ledit empilement comprenant une couche constituée dans un alliage comprenant du Nickel et du Cuivre, dans lequel le pourcentage atomique de Cuivre est supérieur à 1% et inférieur à 25% et dans lequel le pourcentage atomique de Nickel est supérieur à 75% et inférieur à 99%.

Les revêtements précédents sont de façon classique déposés par des techniques de dépôt du type pulvérisation sous vide assistée par champ magnétique d'une cathode du matériau ou d'un précurseur du matériau à déposer, souvent appelée technique de la pulvérisation magnétron dans le domaine, tout comme les revêtements selon la présente invention. Une telle technique est aujourd'hui classiquement utilisée notamment lorsque le revêtement à déposer est constitué d'un empilement plus complexe de couches successives d'épaisseurs de quelques nanomètres ou quelques dizaines de nanomètres.

Cependant, on a pu constater que dans les conditions les plus extrêmes de trempe et surtout de bombage/trempe, l'utilisation de plusieurs couches métalliques successives dans l'empilement pouvait donner lieu à l'apparition de défauts ponctuels sur le vitrage, soit immédiatement après le traitement thermique, plus particulièrement sous la forme de fissures plus ou moins profondes du revêtement, soit ultérieurement après stockage de celui-ci en entrepôt, plus particulièrement sous la forme d'un décollement par endroits d'une couche du revêtement voire du revêtement lui-même(phénomène de délamination).

Le but de la présente invention est donc la mise au point de nouveaux empilements de couches minces agissant sur le rayonnement solaire en vue de fabriquer des vitrages de protection solaire améliorée de stabilité améliorée. Alternativement, les vitrages selon l'invention peuvent également être utilisés comme vitrage d'isolation thermique. L'amélioration visée est notamment de proposer des empilements comprenant plusieurs couches fonctionnelles métalliques à base de niobium, dont la stabilité mécanique et chimique dans le temps est améliorée, notamment après un traitement thermique du vitrage. Par stabilité mécanique et chimique, on entend que l'empilement ne présente ni fissuration ni délamination. Les vitrages selon l'invention ne présentent pas ou quasiment pas de variation de leurs propriétés initiales de filtration du rayonnement incident après ledit traitement thermique, notamment du type trempe/bombage.

Plus précisément, l'objet de l'invention consiste ainsi en premier lieu en un vitrage, de préférence transparent, comprenant au moins un substrat de verre muni sur au moins une de ses faces d'un revêtement constitué par un empilement de couches minces, conférant audit vitrage des propriétés de contrôle thermique, notamment antisolaires, ledit empilement comprenant, à partir de la surface du substrat :
- au moins une sous-couche en un matériau diélectrique,
- une première couche à base de niobium, d'épaisseur physique supérieure à 5 nm, de préférence supérieure à 10 nm, et inférieure à 25 nm,
- une deuxième couche à base de niobium, d'épaisseur physique supérieure à 5 nm et inférieure à 25 nm, de préférence inférieure à 20 nm,
- un ensemble de couches intermédiaires entre ladite première couche à base de niobium et ladite deuxième couche à base de niobium, chaque couche intermédiaire étant constituée dans un matériau diélectrique,
- au moins une surcouche en un matériau diélectrique.

Selon la présente invention, l'ensemble de couches intermédiaires comprend la succession d'une première couche de nitrure, d'un oxyde mixte de zinc et d'étain et d'une deuxième couche de nitrure. Selon des modes de réalisation avantageux et préférentiels de la présente invention, qui peuvent bien entendu être combinés le cas échéant :
Selon des modes particuliers et préférés de la présente invention, qui peuvent le cas échéant être combinés entre eux :
- La première et la deuxième couche intermédiaire de nitrure sont choisies parmi le nitrure de silicium, le nitrure d'aluminium, et leur mélange.
- La couche intermédiaire d'oxyde est un oxyde mixte de zinc et d'étain dont le rapport massique Sn/Zn est compris entre 75/25 et 50/50.
- L'épaisseur sommée de la première intermédiaire de couche de nitrure, de la couche intermédiaire d'oxyde et de la deuxième couche intermédiaire de nitrure est compris entre 30 et 80 nm, de préférence entre 40 et 60 nm.
- L'épaisseur de la première couche de nitrure est comprise entre 10 et 15 nm, dans lequel l'épaisseur de la couche d'oxyde est comprise entre 10 et 50 nanomètres et dans lequel l'épaisseur de la deuxième couche de nitrure est comprise entre 10 et 15 nm.
- L'empilement comprend une première surcouche de nitrure et une deuxième surcouche d'oxyde.
- L'empilement comprend une succession d'une surcouche essentiellement d'un nitrure de silicium et d'une surcouche d'un oxyde choisi parmi l'oxyde de silicium, l'oxyde de titane, l'oxyde d'étain, l'oxyde de zinc, les oxydes mixtes de zinc et d'étain, l'épaisseur optique totale de ladite surcouche étant comprise entre 80 et 140 nm.
- L'empilement comprend en outre des couches de Ti d'épaisseur physique comprise entre environ 1 nm et environ 3 nm, disposées, par rapport au substrat verrier, au-dessus et en dessous d'au moins la première couche fonctionnelle et au contact de celle-ci.
- Les couches de Ti d'épaisseur physique comprise entre environ 1 nm et environ 3 nm sont disposées, par rapport au substrat verrier, au-dessus et en dessous de toutes les couches fonctionnelles présentes dans le revêtement et au contact de celles-ci.
- Le matériau diélectrique constituant la sous couche est choisi parmi le nitrure de silicium, le nitrure d'aluminium, et leur mélange.
- La première couche fonctionnelle présente une épaisseur comprise entre 12 et 25 nm et dans laquelle la deuxième couche fonctionnelle présente une épaisseur inférieure d'au moins 5 nanomètres à la première, en particulier comprise entre 7 et 20 nm.
- L'empilement de couches minces est disposé en face 2 d'un vitrage simple en numérotant les faces du substrat de l'extérieur vers l'intérieur du bâtiment ou de l'habitacle qu'il équipe.
- Le vitrage est trempé thermiquement et/ou bombé.
L'invention concerne également un panneau de parement de façade de type allège incorporant au moins un vitrage tel que décrit précédemment.

Sans sortir du cadre de l'invention, il est possible selon l'invention de substituer le silicium dans les couches diélectriques, notamment celles constituées essentiellement de nitrure de silicium, par des éléments du type Al, Zr, B, etc., de manière à modifier la couleur en transmission et/ou en réflexion du vitrage, selon les techniques bien connues de l'art et en des proportions pouvant aller jusqu'à 10% atomique sur la base du silicium.

Par le terme « à base de niobium», on entend au sens de la présente invention que les couches comprennent comme élément métallique du niobium dans une très large proportion, mis à part les impuretés inévitables. Par exemple les couches métalliques à base de niobium selon l'invention peuvent comprendre plus de 80% de niobium, de préférence plus de 90% ou même plus de 95% de niobium, voire plus de 99% de niobium, rapporté à l'ensemble des atomes d'éléments métalliques présents dans ladite couche. De manière très préférée, les couches comprennent exclusivement du niobium comme élément métallique, mis à part les impuretés inévitables.

De manière générale, les couches selon l'invention présentent un caractère métallique et ne comprennent que des métaux, à l'exclusion notamment de l'azote. Selon certains modes particuliers, outre les éléments métalliques, les couches à base de niobium selon l'invention peuvent cependant comprendre une quantité très minoritaire d'oxygène, notamment en fonction des conditions de dépôt desdites couches, en particulier par les techniques de la pulvérisation magnétron citées précédemment. Cette quantité est cependant nécessairement très limitée, de telle façon que les propriétés de conductivité électrique de ladite couche à base de niobium ne soit pas ou très peu modifiées et en tout état de cause restent de nature métallique.

Par exemple, les couches à base de niobium comprennent une quantité très minime d'oxygène de telle façon que le rapport des signaux NbO/Nb dans ladite couche, en analyse SIMS (Spectrométrie de Masse à Ionisation Secondaire), soit compris entre 1,8 et 2,8, de préférence entre 2,1 et 2,5. La spectrométrie de masse à ionisation secondaire (secondary ion mass spectrometry) est un procédé qui consiste à bombarder la surface de l'empilement à analyser avec un faisceau d'ions. L'échantillon est pulvérisé, et une partie de la matière pulvérisée est ionisée. Les ions dits secondaires sont accélérés vers un spectromètre de masse qui permettra de mesurer la composition élémentaire, isotopique ou moléculaire de la surface de l'échantillon. Les profils en profondeur des empilements sont notamment définis à l'aide d'un équipement TOF SIMS 5 de la société IONTF dans les conditions expérimentales suivantes : Le profil des ions secondaires est obtenu en utilisant comme source d'ions primaires les ions Bi₃²⁺ à 60 keV avec un courant pulsé de 0,3 pA (avec un pulse de 7 ns et un temps de cycle de 100 microsecondes) et comme espèces abrasantes des ions Cs⁺ à 1 keV, avec un courant pulsé de 50 nA. La surface pulvérisée est un carré de 200 micromètres de côté. La région analysée est un carré de 50 micromètres de côté centrée sur le fond du cratère. Un canon à électron est utilisé pour neutraliser la surface de façon à réduire les effets de charge (charging effects).

De manière préférée selon la présente invention, toutes les couches fonctionnelles présentes dans l'empilement sont à base de niobium, au sens précédemment décrit.

Enfin l'invention concerne un procédé de fabrication d'un vitrage tel que précédemment décrit, comprenant au moins les étapes suivantes :
- on introduit un substrat verrier dans un dispositif de pulvérisation cathodique,
- dans un premier compartiment on dépose une sous-couche d'un matériau diélectrique,
- dans un compartiment ultérieur, on pulvérise une cible en niobium métallique, en présence d'un gaz de pulvérisation comme l'argon,
- dans des compartiments ultérieurs on dépose les couches intermédiaires en les différents matériaux diélectriques,
- dans un compartiment ultérieur, on pulvérise une cible en niobium métallique, en présence d'un gaz de pulvérisation comme l'argon,
- dans un compartiment ultérieur, on dépose une surcouche d'un matériau diélectrique.

Par les termes « sous couche », « sur-couche » et « couche intermédiaire », il est fait référence dans la présente description à la position respective desdites couches par rapport à la ou les couches fonctionnelles dans l'empilement, ledit empilement étant supporté par le substrat verrier.

En particulier, la sous couche est généralement la couche au contact du substrat verrier et on appelle surcouche la ou les couches les plus externes de l'empilement, située dans l'empilement à l'opposé du substrat, par rapport aux couches fonctionnelles à base de niobium.

Par épaisseur physique (ou géométrique) d'une couche, on entend au sens de la présente invention l'épaisseur réelle de la couche, telle qu'elle peut être mesurée notamment par les techniques classique de microscopie électronique. Sauf mention expresse, toutes les épaisseurs reportées dans la présente demande sont physiques.

A contrario, par épaisseur optique, on entend classiquement au sens de la présente invention l'épaisseur physique précédente, multipliée par l'indice de réfraction n du matériau qui le constitue, mesurée à 550 nm.

Si l'application plus particulièrement visée par l'invention est le vitrage pour le bâtiment, il est clair que d'autres applications sont envisageables, notamment dans les vitrages de véhicules (mis à part le pare-brise où l'on exige une très haute transmission lumineuse), comme les verres latéraux, le toit-auto, la lunette arrière.

L'invention et ses avantages sont décrits avec plus de détails, ci-après, au moyen des exemples non limitatifs ci-dessous, selon l'invention et comparatifs. Dans tous les exemples et la description, à moins qu'autrement spécifié, les épaisseurs données sont physiques.

Tous les substrats sont en verre clair de 2 mm d'épaisseur de type Planilux® commercialisé par la société Saint-Gobain Glass France.

Toutes les couches sont déposées de façon connue par pulvérisation cathodique assistée par champ magnétique (souvent appelé magnétron) selon les techniques classiques de l'art.

De façon bien connue, les différentes couches successives sont déposées dans les compartiments successifs du dispositif de pulvérisation cathodique, chaque compartiment étant muni d'une cible métallique spécifique en Si, Ti ou Nb ou en un alliage SnZn, en fonction de la couche recherchée de l'empilement.

Les couches en niobium sont obtenues à partir de la cible correspondante dans une atmosphère exclusivement d'argon.

Les couches en nitrure de silicium sont déposées dans un premier compartiment du dispositif à partir d'une cible de silicium métallique (dopé avec 8% en masse d'aluminium), dans une atmosphère réactive contenant de l'azote (40% Ar et 60% N₂ en volume). Ces couches essentiellement en nitrure de silicium contiennent donc un peu d'aluminium. Ces couches sont désignées par la suite selon la formulation générale Si₃N₄, même si la couche déposée ne répond pas forcément à cette stœchiométrie supposée.

Les couches de Ti métalliques sont obtenues par pulvérisation d'une cible en titane métallique par un plasma d'Argon.

Les couches en oxyde mixte de zinc et d'étain (SnZnO) sont déposées par pulvérisation d'une cible à base d'un mélange comprenant 60% d'étain et 40% de zinc (en masse), en présence d'un mélange argon/oxygène (environ 50/50 en volume).

Dans les exemples qui suivent, le substrat verrier a ainsi été recouvert successivement d'un empilement de couches comprenant deux couches fonctionnelles en Nb, des bloqueurs en titane disposés de part et d'autre de chaque couche fonctionnelle et des sous couche, surcouche et couche intermédiaire en nitrure de silicium Si₃N₄ et en SnZnO (selon les exemples).

On donne ci-après quelques indications générales sur le dépôt des couches en ce qui concerne l'appareillage utilisé par la société déposante, sachant que la mise au point et la détermination des paramètres optimaux pour chaque dépôt est bien connu dans le domaine technique du dépôt de couches minces par la technique de la pulvérisation magnétron :
La vitesse de progression du substrat verrier dans le dispositif magnétron est de 5,0 m/min pour tous les empilements. La pression totale des gaz est fixée à 3,5 mTorr (1 Torr = 133 Pascals) dans tous les compartiments de dépôt. Les couches de niobium sont déposées sous une tension de 300V, avec une vitesse de dépôt de 35 nm/(m/min).

### Exemple 1 (selon WO2009/150881) :

Les paramètres de dépôts ont été ajustés selon les techniques classiques et dans les conditions précédemment décrites pour l'obtention d'un empilement répondant à la séquence suivante :

| (Couche) | (Epaisseur) |
|---|---|
| Si₃N₄ | 60 nm |
| Ti | 1 nm |
| Nb | 9 nm |
| Ti | 1 nm |
| Si₃N₄ | 50 nm |
| Ti | 1 nm |
| Nb | 17 nm |
| Ti | 1 nm |
| Si₃N₄ | 25 nm |
| Substrat verre | |

Cet exemple 1 comparatif est conforme à l'enseignement de la demande de brevet WO2009/150881.

### Exemple 2 (invention) :

Dans cet exemple 2, on dispose sur le substrat verrier, selon les mêmes techniques que décrites précédemment, un empilement de couches comprenant deux couches fonctionnelles en niobium, séparées par un ensemble de couches intermédiaires selon l'invention, selon une succession d'une couche de nitrure, d'une couche d'oxyde mixte de zinc et d'étain et d'une couche de nitrure de silicium. Le revêtement correspond au final à l'empilement suivant :

| (Couche) | (Epaisseur) |
|---|---|
| Si₃N₄ | 60 nm |
| Ti | 1 nm |
| Nb | 9 nm |
| Ti | 1 nm |
| Si₃N₄ | 15 nm |
| SnZnO | 20 nm |
| Si₃N₄ | 15 nm |
| Ti | 1 nm |
| Nb | 17 nm |
| Ti | 1 nm |
| Si₃N₄ | 25 nm |
| Substrat verre | |

### Exemple 3 (invention) :

Dans cet exemple 3, on dispose sur le substrat verrier, selon les mêmes techniques que précédemment, un empilement de couches comprenant deux couches fonctionnelles en niobium, séparées par un ensemble de couches intermédiaires selon l'invention, selon une succession d'une couche de nitrure, d'une couche d'oxyde mixte de zinc et d'étain et d'une couche de nitrure de silicium. En outre, les couches les plus externes de l'empilement sont constituées par une première surcouche de nitrure de silicium et une seconde surcouche d'oxyde mixte de zinc et d'étain. Le revêtement correspond au final à l'empilement suivant :

| (Couche) | (Epaisseur) |
|---|---|
| SnZnO | 30 nm |
| Si₃N₄ | 30 nm |
| Ti | 1 nm |
| Nb | 9 nm |
| Ti | 1 nm |
| Si₃N₄ | 15 nm |
| SnZnO | 20 nm |
| Si₃N₄ | 15 nm |
| Ti | 1 nm |
| Nb | 17 nm |
| Ti | 1 nm |
| Si₃N₄ | 25 nm |
| Substrat verre | |

Les caractéristiques et propriétés des vitrages obtenus selon les trois exemples précédents sont analysées et reportées ci-après :

### A- Tests de bombage

Les vitrages munis des empilements selon les exemples 1 à 3 sont soumis à un traitement de bombage. Les vitrages sont chauffés pendant 7 minutes à 650°C et un bombage par pressage est opéré selon les techniques de l'art (empilement vers le bas). Les vitrages bombés sont ensuite refroidis jusqu'à la température ambiante.

Les vitrages sont inspectés visuellement et au microscope optique immédiatement après le refroidissement. Le nombre de fissures est comptabilisé sur la portion centrale du vitrage bombé, soumise aux plus fortes sollicitations mécaniques.

Les vitrages ayant subi le bombage sont ensuite stockés en entrepôt plusieurs semaines puis sont inspectés de la même façon que précédemment.

Les résultats sont reportés dans le tableau 1 qui suit dans lequel :
- le signe (+) indique l'absence totale de fissurations ou de délamination du revêtement détectés sur l'échantillon, après bombage ou stockage,
- le signe (=) indique la présence détectée de quelques fissurations ou d'un début de délamination de l'empilement, ces défauts étant uniquement observables au microscope optique,
- le signe (-) indique la présence de quelques fissurations visibles sur l'échantillon après bombage.

**Tableau 1**

| | Fissurations après bombage | Délamination après stockage |
|---|---|---|
| Exemple 1 | - | = |
| Exemple 2 | = | + |
| Exemple 3 | + | + |

On voit dans le tableau 1 que le degré de défauts observé dans les revêtements est fortement diminué pour le vitrage selon les exemples selon l'invention, après le bombage ou après le stockage.

### B- Mesure des propriétés optiques et d'isolation thermique des vitrages avant et après le traitement thermique

Les caractéristiques thermique, optique et colorimétrique des vitrages selon les exemples 1 et 3 ont été mesurées selon les systèmes et normes suivantes :

### 1°) Propriétés optiques et colorimétriques :

Les mesures sont effectuées conformément à la norme européenne ISO 9050 (2003).
Plus précisément :
- la transmission lumineuse T_{L} est mesurée selon l'illuminant D₆₅,
- la réflexion intérieure R_{Lint} est la réflexion (en %) mesurée coté couche du local ou du bâtiment, quand le verre revêtu est monté en vitrage monolithique dans un local avec l'empilement de couches en face 2 (selon le système conventionnel de numérotation des faces d'un substrat),
- a*_{c}, b*_{c} sont les coordonnées colorimétriques en réflexion intérieur (coté couche) selon le modèle de colorimétrie (L, a*, b*).

### 2°) Propriétés thermiques :

Les propriétés d'isolation thermique du vitrage sont évaluées par la détermination de l'émissivité à incidence normale εₙ mesurée sur la face intérieure du substrat recouverte de l'empilement de couches, selon les conditions décrites dans la norme ISO 10292 (1994), annexe A.

Les valeurs de transmission lumineuse T_{L}, de réflexion lumineuse R_{Lint}, les coefficients colorimétriques a*_{c}, b*_{c} et l'émissivité normale εₙ sont mesurées pour le vitrage muni de l'empilement d'abord en sortie de la ligne magnétron puis après un traitement thermique consistant en un chauffage à 620°C pendant 10 minutes suivi d'une trempe.

Les résultats obtenus sont regroupés dans le tableau 2 qui suit :

**Tableau 2**

| | **Avant trempe** | | | | | **Après trempe et bombage** | | | | |
|---|---|---|---|---|---|---|---|---|---|---|
| | R_{Lint} | a*_{c} | b*_{c} | T_{L} | ε_{N} | R_{Lint} | a*_{c} | b*_{c} | T_{L} | ε_{N} |
| Ex.1 | 3 | -2,2 | -18 | 7 | 0,17 | 3 | 6,6 | -8,5 | 6 | 0,19 |
| Ex.3 | 3 | -2,5 | -19 | 7,2 | 0,17 | 3 | 6,2 | -8,9 | 6 | 0,20 |

Les données reportées dans le tableau 2 montrent que les vitrages selon les deux exemples présentent une variation de l'émissivité normale minime après avoir subi le traitement thermique. Aucune différence significative n'est observable entre les deux vitrages, tant au niveau des propriétés d'isolation thermiques que des propriétés de colorimétrie.

## Revendications

1. Vitrage comprenant au moins un substrat de verre muni sur au moins une de ses faces d'un revêtement constitué par un empilement de couches minces, conférant audit vitrage des propriétés de contrôle thermique, notamment antisolaire, ledit revêtement comprenant au moins, à partir de la surface du substrat :
- au moins une sous-couche en un matériau diélectrique,
- une première couche fonctionnelle à base de niobium, d'épaisseur physique supérieure à 5 nm et inférieure à 25 nm,
- une deuxième couche fonctionnelle à base de niobium, d'épaisseur physique supérieure à 5 nm et inférieure à 25 nm,
- un ensemble de couches intermédiaires entre ladite première couche en niobium et ladite deuxième couche en niobium, chaque couche intermédiaire étant constituée dans un matériau diélectrique,
- au moins une surcouche en un matériau diélectrique,
dans lequel ledit ensemble de couches intermédiaires comprend la succession d'une première couche de nitrure, d'une couche d'un oxyde mixte de zinc et d'étain et d'une deuxième couche de nitrure.

2. Vitrage selon la revendication 1, dans lequel la première et la deuxième couche intermédiaire de nitrure sont choisies parmi le nitrure de silicium, le nitrure d'aluminium, et leur mélange.

3. Vitrage selon l'une des revendications précédentes, dans lequel la couche intermédiaire d'oxyde est un oxyde mixte de zinc et d'étain dont le rapport massique Sn/Zn est compris entre 75/25 et 50/50.

4. Vitrage selon l'une des revendications précédentes, dans lequel l'épaisseur sommée de la première intermédiaire de couche de nitrure, de la couche intermédiaire d'oxyde et de la deuxième couche intermédiaire de nitrure est compris entre 30 et 80 nm, de préférence entre 40 et 60 nm.

5. Vitrage selon l'une des revendications précédentes, dans lequel l'épaisseur de la première couche de nitrure est comprise entre 10 et 15 nm, dans lequel l'épaisseur de la couche d'oxyde est comprise entre 10 et 50 nanomètres et dans lequel l'épaisseur de la deuxième couche de nitrure est compris entre 10 et 15 nm.

6. Vitrage selon l'une des revendications précédentes, dans lequel ledit empilement comprend une première surcouche de nitrure et une deuxième surcouche d'oxyde.

7. Vitrage selon la revendication précédente, comprenant une succession d'une surcouche essentiellement d'un nitrure de silicium et d'une surcouche d'un oxyde choisi parmi l'oxyde de silicium, l'oxyde de titane, l'oxyde d'étain, l'oxyde de zinc, les oxydes mixtes de zinc et d'étain, l'épaisseur optique totale de ladite surcouche étant comprise entre 80 et 140 nm.

8. Vitrage selon l'une des revendications précédentes, dans lequel ledit empilement comprend en outre des couches de Ti d'épaisseur physique comprise entre environ 1 nm et environ 3 nm, disposées, par rapport au substrat verrier, au-dessus et en dessous d'au moins la première couche fonctionnelle et au contact de celle-ci.

9. Vitrage selon la revendication précédente, dans lequel des couches de Ti d'épaisseur physique comprise entre environ 1 nm et environ 3 nm sont disposées, par rapport au substrat verrier, au-dessus et en dessous de toutes les couches fonctionnelles présent dans le revêtement et au contact de celles-ci.

10. Vitrage selon l'une des revendications précédentes, dans lequel le matériau diélectrique constituant la sous couche est choisi parmi le nitrure de silicium, le nitrure d'aluminium, et leur mélange.

11. Vitrage selon l'une des revendications précédentes, dans lequel la première couche fonctionnelle présente une épaisseur comprise entre 12 et 25 nm et dans laquelle la deuxième couche fonctionnelle présente une épaisseur inférieure d'au moins 5 nanomètres à la première, en particulier comprise entre 7 et 20 nm.

12. Vitrage simple selon l'une des revendications précédentes, l'empilement de couches minces étant disposé en face 2 du vitrage simple en numérotant les faces du substrat de l'extérieur vers l'intérieur du bâtiment ou de l'habitacle qu'il équipe.

13. Vitrage selon l'une des revendications précédentes, **caractérisé en ce qu'**il est trempé thermiquement et/ou bombé.

14. Panneau de parement de façade de type allège incorporant au moins un vitrage selon l'une des revendications 1 à 13.

## Patentansprüche

1. Verglasung, umfassend mindestens ein Glassubstrat, das auf mindestens einer seiner Flächen mit einer Beschichtung versehen ist, die aus einem Stapel dünner Schichten besteht, die der Verglasung wärmesteuernde Eigenschaften, insbesondere Sonnenschutzeigenschaften, verleihen, wobei die Beschichtung mindestens, ab der Substratoberfläche, umfasst:
- mindestens eine Unterschicht aus einem dielektrischen Material,
- eine erste funktionelle Schicht auf der Basis von Niob mit einer physikalischen Dicke von mehr als 5 nm und weniger als 25 nm,
- eine zweite funktionelle Schicht auf der Basis von Niob mit einer physikalischen Dicke von mehr als 5 nm und weniger als 25 nm,
- eine Einheit von Zwischenschichten zwischen der ersten Niobschicht und der zweiten Niobschicht, wobei jede Zwischenschicht aus einem dielektrischen Material besteht,
- mindestens eine Deckschicht aus einem dielektrischen Material,
wobei die Einheit von Zwischenschichten die Abfolge einer ersten Nitridschicht, einer Schicht aus einem Zink-Zinn-Mischoxid und einer zweiten Nitridschicht umfasst.

2. Verglasung nach Anspruch 1, wobei die erste und die zweite Nidrid-Zwischenschicht aus Siliziumnitrid, Aluminiumnitrid und deren Gemisch ausgewählt sind.

3. Verglasung nach einem der vorhergehenden Ansprüche, wobei die Oxid-Zwischenschicht ein Zink-Zinn-Mischoxid ist, dessen Massenverhältnis Sn/Zn zwischen 75/25 und 50/50 liegt.

4. Verglasung nach einem der vorhergehenden Ansprüche, wobei die summierte Dicke der ersten Nitrid-Zwischenschicht, der Oxid-Zwischenschicht und der zweiten Nitrid-Zwischenschicht zwischen 30 und 80 nm, vorzugsweise zwischen 40 und 60 nm, liegt.

5. Verglasung nach einem der vorhergehenden Ansprüche, wobei die Dicke der ersten Nitridschicht zwischen 10 und 15 nm liegt, wobei die Dicke der Oxidschicht zwischen 10 und 50 Nanometer liegt und wobei die Dicke der zweiten Nitridschicht zwischen 10 und 15 nm liegt.

6. Verglasung nach einem der vorhergehenden Ansprüche, wobei der Stapel eine erste Nitrid-Deckschicht und eine zweite Oxid-Deckschicht umfasst.

7. Verglasung nach vorhergehendem Anspruch, umfassend eine Abfolge einer Deckschicht im Wesentlichen aus einem Siliziumnitrid und einer Deckschicht aus einem Oxid, ausgewählt aus Siliziumoxid, Titanoxid, Zinnoxid, Zinkoxid, Zink-Zinn-Mischoxiden, wobei die optische Gesamtdicke der Deckschicht zwischen 80 und 140 nm liegt.

8. Verglasung nach einem der vorhergehenden Ansprüche, wobei der Stapel ferner Ti-Schichten mit einer physikalischen Dicke zwischen zirka 1 nm und zirka 3 nm umfasst, die relativ zum Glassubstrat oberhalb und unterhalb mindestens der ersten funktionellen Schicht und im Kontakt mit dieser angeordnet sind.

9. Verglasung nach vorhergehendem Anspruch, wobei Ti-Schichten mit einer physikalischen Dicke zwischen zirka 1 nm und zirka 3 nm in Bezug auf das Glassubstrat oberhalb und unterhalb aller funktionellen Schichten, die in der Beschichtung vorhanden sind, und im Kontakt mit diesen angeordnet sind.

10. Verglasung nach einem der vorhergehenden Ansprüche, wobei das die Unterschicht bildende dielektrische Material aus Siliziumnitrid, Aluminiumnitrid und deren Gemisch ausgewählt ist.

11. Verglasung nach einem der vorhergehenden Ansprüche, wobei die erste funktionelle Schicht eine Dicke zwischen 12 und 25 nm aufweist und wobei die zweite funktionelle Schicht eine Dicke von mindestens 5 Nanometern weniger als die erste, insbesondere zwischen 7 und 20 nm, aufweist.

12. Einfachverglasung nach einem der vorhergehenden Ansprüche, wobei der Stapel dünner Schichten auf Seite 2 der Einfachverglasung angeordnet ist, wobei die Seiten des Substrats von außen nach innen des damit ausgestatteten Gebäudes oder Fahrgastraums nummeriert sind.

13. Verglasung nach einem der vorhergehenden Ansprüche, **dadurch gekennzeichnet, dass** sie thermisch vorgespannt und/oder gebogen ist.

14. Fassadenverkleidungsplatte vom Brüstungstyp mit mindestens einer Verglasung nach einem der Ansprüche 1 bis 13.

## Claims

1. A glazing unit comprising at least one glass substrate equipped on at least one of its faces with a coating consisting of a multilayer of thin films providing said glazing unit with heat-control, and especially solar-control, properties, said coating comprising at least, from the surface of the substrate:
- at least one underlayer film made of a dielectric material;
- a first functional film based on niobium, of physical thickness larger than 5 nm and smaller than 25 nm;
- a second functional film based on niobium, of physical thickness larger than 5 nm and smaller than 25 nm;
- a set of intermediate films between said first niobium film and said second niobium film, each intermediate film being made of a dielectric material; and
- at least one overlayer film made of a dielectric material,
in which said set of intermediate films comprises the succession of a first nitride film, an mixed tin and zinc oxide film and a second nitride film.

2. The glazing unit as claimed in claim 1, in which the first and second intermediate nitride film are chosen from silicon nitride, aluminum nitride and a mixture thereof.

3. The glazing unit as claimed in one of the preceding claims, in which the intermediate oxide film is a mixed tin zinc oxide the Sn/Zn weight ratio of which is comprised between 75/25 and 50/50.

4. The glazing unit as claimed in one of the preceding claims, in which the summed thickness of the first intermediate nitride film, of the intermediate oxide film and of the second intermediate nitride film is comprised between 30 and 80 nm and preferably between 40 and 60 nm.

5. The glazing unit as claimed in one of the preceding claims, in which the thickness of the first nitride film is comprised between 10 and 15 nm, in which the thickness of the oxide film is comprised between 10 and 50 nanometers, and in which the thickness of the second nitride film is comprised between 10 and 15 nm.

6. The glazing unit as claimed in one of the preceding claims, in which said multilayer comprises a nitride first overlayer film and an oxide second overlayer film.

7. The glazing unit as claimed in the preceding claim, comprising a succession of an overlayer film essentially made of a silicon nitride and an overlayer film of an oxide chosen from silicon oxide, titanium oxide, tin oxide, zinc oxide and mixed tin zinc oxides, the total optical thickness of the overlayer being comprised between 80 and 140 nm.

8. The glazing unit as claimed in one of the preceding claims, in which said multilayer furthermore comprises films of Ti of physical thickness comprised between about 1 nm and about 3 nm, placed, relative to the glazing substrate, above and below at least the first functional film and making contact with the latter.

9. The glazing unit as claimed in the preceding claim, in which films of Ti of physical thickness comprised between about 1 nm and about 3 nm are placed, relative to the glazing substrate, above and below all the functional films present in the coating and making contact with said films.

10. The glazing unit as claimed in one of the preceding claims, in which the dielectric material of the underlayer film is chosen from silicon nitride, aluminum nitride and a mixture thereof.

11. The glazing unit as claimed in one of the preceding claims, in which the first functional film has a thickness comprised between 12 and 25 nm and in which the second functional film has a thickness smaller by at least 5 nanometers than the first and in particular comprised between 7 and 20 nm.

12. A single glazing unit as claimed in one of the preceding claims, the multilayer of thin films being placed on face 2 of the single glazing unit, the faces of the substrate being numbered from the exterior to the interior of the building or passenger compartment fitted therewith.

13. The glazing unit as claimed in one of the preceding claims, **characterized in that** it is bent and/or thermally tempered.

14. A facade facing panel of the spandrel glass type incorporating at least one glazing unit as claimed in one of claims 1 to 13.
